(19) **Europäisches Patentamt**

**European Patent Office**

**Office européen des brevets**

(11) **EP 1 045 170 B1**

(12) **EUROPÄISCHE PATENTSCHRIFT**

(45) Veröffentlichungstag und Bekanntmachung des Hinweises auf die Patenterteilung:
**12.12.2001  Patentblatt 2001/50**

(51) Int Cl.[7]: **F16H 55/08**, F16H 3/22

(21) Anmeldenummer: **00108344.3**

(22) Anmeldetag: **14.04.2000**

(54) **Umkehr-Schieberad-Anordnung für ein Wechselgetriebe**

Sliding reverse gear arrangement for speed-changing gear

Roue dentée coulissante pour engrenage de changement de vitesse

(84) Benannte Vertragsstaaten:
**DE ES FR GB IT**

(30) Priorität: **15.04.1999  EP 99107511**

(43) Veröffentlichungstag der Anmeldung:
**18.10.2000  Patentblatt 2000/42**

(73) Patentinhaber: **Ford Global Technologies, Inc.,
A subsidiary of Ford Motor Company
Dearborn, Michigan 48126 (US)**

(72) Erfinder: **Mohr, Christian
54290 Trier (DE)**

(74) Vertreter: **Messulam, Alec Moses
A. Messulam & Co. Ltd.,
43-45 High Road
Bushey Heath, Bushey, Herts WD23 1EE (GB)**

(56) Entgegenhaltungen:
**EP-A- 0 547 632**          **WO-A-84/02964**
**DE-A- 3 640 450**          **DE-B- 1 214 966**

**Beschreibung**

Die Erfindung bezieht sich auf eine Umkehr-Schieberad-Anordnung für ein Wechselgetriebe der im Oberbegriff des Patentanspruches 1 erläuterten Art.

Aus der EP 0 547 632 A1 ist eine Umkehr-Schieberad-Anordnung für ein Wechselgetriebe der im Oberbegriff erläuterten Art bekannt, bei der die an den Stirnkanten der Zahnräder vorgesehenen Anspitzungen oder Abdachungen an jedem zweiten Zahn um ein axiales Maß zurückgenommen sind und auch die Anspitzungen oder Abdachungen an zwei aufeinanderfolgenden Zähnen mit unterschiedlichen Winkeln ihrer Schneidenkante ausgebildet sind.

Dadurch kann es beim sogenannten Einspuren des Umkehr-Schieberades nicht mehr zu einem das Einspuren sehr behindernden Doppelkontakt von zwei aufeinanderfolgenden Schneidenkanten kommen und der Einspurvorgang wird erleichtert.

Aus der DE 36 40 450 A1 ist eine weitere Umkehr-Schieberad-Anordnung für ein Wechselgetriebe der im Oberbegriff des Patentanspruches 1 erläuterten Art bekannt, bei der die an den miteinander in Eingriff zu bringenden Stirnkanten der Zahnräder ausgebildeten Anspitzungen oder Abdachungen Vorderkanten bzw. Schneidenkanten aufweisen, die um eine radiale Zurücknahme verkürzt sind, wobei diese radiale Zurücknahme bis zu den geometrischen Berührungspunkten der aufeinandertreffenden Schneidenkanten erfolgt.

Die radiale Zurücknahme erfolgt hierbei durch eine sich vom geometrischen Berührungspunkt in einem flacheren Winkel erstreckenden Fläche, die durch die Anspitzung oder Abdachung in Verbindung mit der Zahnform eine fünfeckige Fläche darstellt.

Aus der früheren Patentanmeldung 98 10 70 96.4 vom 18. April 1998 ist auch bereits eine Umkehr-Schieberad-Anordnung für ein Wechselgetriebe bekannt, bei der die in den beiden vorgenannten Schriften aufgezeigten Maßnahmen zum Verbessern des Einspurens eines Umkehr-Schieberades in Kombination angeordnet sind, d.h., es wird dort sowohl die axiale Zurücknahme der Anspitzung oder Abdachung an jeweils zwei aufeinanderfolgenden Zahnrädern in Kombination mit der radialen Zurücknahme der Vorderkante oder Schneidenkante vorgeschlagen.

Die Aufgabe der vorliegenden Erfindung ist es, daß Einspuren eines Umkehr-Schieberades so weit zu verbessern, daß möglichst eine Blockierrate von 0 erreicht wird und daß darüber hinaus die Herstellung der entsprechenden Zurücknahmen an den verschiedenen miteinander zusammenwirkenden Zahnrädern in kostengünstiger und robuster Weise ermöglicht wird.

Gemäß der Erfindung wird diese Aufgabe gelöst, indem bei einer Umkehr-Schieberad-Anordnung für ein Wechselgetriebe nach dem Oberbegriff des Patentanspruches 1, die im Kennzeichenteil des Patentanspruches 1 aufgezeigten Merkmale angewendet werden.

In den weiteren Patentansprüchen sind weitere zweckmäßige Ausgestaltungen der Erfindung erläutert.

Dadurch, daß die miteinander in Eingriff kommenden drei Zahnräder an einem Zahnrad Anspitzungen oder Abdachungen mit einer axialen Zurücknahme an jeden zweiten Zahn aufweisen und an den beiden anderen der drei miteinander zusammenwirkenden Zahnräder die radiale Zurücknahme jeweils durch einen zylindrischen Absatz mit einem bestimmten Durchmesser gebildet wird, der sich durch eine Formel 1, aus den Zähnezahlen der miteinander in Eingriff kommenden Zahnräder, dem Achsabstand und der axialen Zurücknahme errechnen läßt, kann die erforderliche radiale Zurücknahme bereits bei der Herstellung der Rohlinge der Zahnräder durch eine Drehkontur bereitgestellt werden.

In ähnlicher Weise wird nach der weiteren Ausführungsform der Erfindung eine Drehkontur als Ersatz für die Anspitzung in Verbindung mit einer völlig einseitigen Anfasung vorgeschlagen, wodurch auch hier die Herstellung kostenmäßig wesentlich günstiger wird.

In ebenfalls ähnlicher Weise kann in einer weiteren Ausführungsform mit gleich oder unterschiedlich geneigten Anfasungen und eventuell aus der Zahnmitte verschobener Schneidkante bei gleichzeitiger Anbringung einer dreistufigen radialen Zurücknahme ein Doppelkontakt vermieden bzw. eine asymmetrische Doppelkontaktkonstellation im Grenzfall erzeugt und Blockierfreiheit gewährleistet werden.

Eine weitere vorteilhafte Ausgestaltung sieht vor, daß an mindestens einem der Zahnräder mit den zylindrischen Absätzen die aus der radialen Zurücknehmung resultierenden, axial zurückgenommenen Stirnseiten der Verzahnung über den zylindrischen Absätzen eine Anspitzung mit einer Schneidkante aufweisen. Hierdurch wird das Einrückverhalten dahingehend verbessert, das bei einer Einrückstellung von ein oder zwei axial zurückgenommenen Zähnen des Umkehr-Schieberades auf den flachen Stirnkanten der anderen beiden Zahnräder ein Blockieren verhindert wird.

Die Schneidkanten über den zylindrischen Absätzen können dabei zum Zahn symmetrisch oder unsymmetrisch angeordnet sein. Im Extremfall können die Schneidkanten am Rand des Zahnkörpers liegen, was einer einseitigen Abdachung entspricht.

Bezüglich der symmetrischen und unsymmetrischen Anordnung der Schneidkanten an der vorderen Anspitzung und an der Anspitzung über den zylindrischen Absätzen sind beliebige Kombinationen möglich. Es ist demnach möglich, die Schneidkanten beide symmetrisch, beide unsymmetrisch oder in der Kombination symmetrischunsymmetrisch anzuordnen. Entsprechend müssen die Schneidkanten der beiden Anspitzungen nicht in einer Flucht liegen und auch nicht, bezogen auf die Zahnachse, parallel zueinander angeordnet sein.

Eine Kombination der Anspitzung über dem zylindrischen Absatz mit anderen, bekannten Anspitzungsvarianten ist möglich und vorteilhaft für deren Funktion.

Die Erfindung wird anhand der in den Zeichnungen gezeigten Ausführungsbeispiele näher erläutert. Es zeigt:

Fig. 1 eine schematische Darstellung einer Umkehr-Schieberad-Anordnung für ein Wechselgetriebe in Achsansicht;

Fig. 2 eine schematische Getriebeaufrollung der miteinander zusammenwirkenden Zahnräder, wobei das Zahnrad auf der Eingangswelle und das Zahnrad auf der Ausgangswelle nur je zur Hälfte dargestellt sind;

Fig. 3 eine Ansicht des Zahnrades auf der Eingangswelle mit entsprechenden Ansichten und Schnitten durch die Anspitzung oder Abdachung eines Zahnes;

Fig. 4 eine Ansicht des Schieberades mit entsprechenden Schnitten und Ansichten seiner unterschiedlichen Anspitzungen und Zurücknahmen an den verschiedenen Zähnen;

Fig. 5 eine Ansicht des Zahnrades auf der Ausgangswelle mit entsprechenden Ansichten und Schnitten der Anspitzung oder Abdachung eines Zahnes;

Fig. 6 eine Ansicht des Zahnrades auf der Eingangswelle mit entsprechenden Ansichten und Schnitten durch die Anspitzung oder Abdachung eines Zahnes einer weitere Ausführungsform,

Fig. 7 eine Ansicht des Zahnrades auf der Eingangswelle mit entsprechenden Ansichten und Schnitten durch die Anspitzung oder Abdachung eines Zahnes einer weiteren Ausführungsform, und

Fig. 8 eine Ansicht des Zahnrades auf der Eingangswelle mit entsprechenden Ansichten und Schnitten durch die Anspitzung eines Zahnes einer weiteren Ausführungsform.

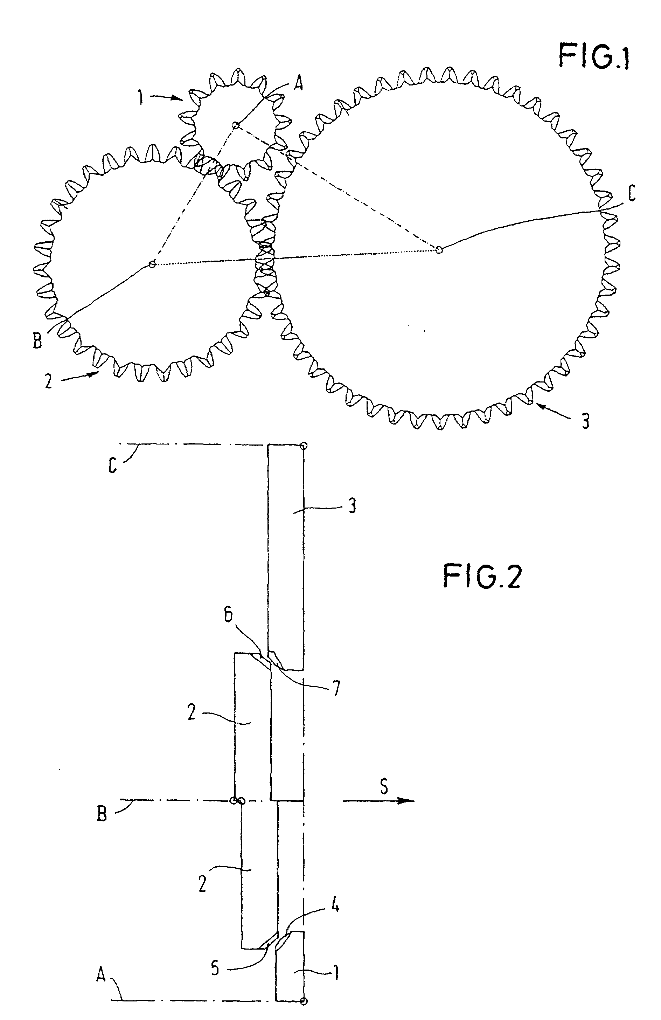

In Fig. 1 sind die entsprechenden Achsen der Eingangswelle, der Schieberadachse und der Ausgangswelle mit A, B und C bezeichnet.

Ein Zahnrad 1 ist hierbei auf einer Eingangswelle (nicht gezeigt) mit der Achse A angeordnet. Ein Schieberad 2 ist auf einer Schieberadachse (nicht gezeigt) auf der Achse B angeordnet und ein Zahnrad 3 ist auf einer Ausgangswelle (nicht gezeigt) auf der Achse C angeordnet.

Die Einschieberichtung bzw. Einspurrichtung des Umkehr-Schieberades 2 ist in Fig. 2 mit einem Pfeil S angegeben.

Die Stirnkanten der Verzahnungen der miteinander in Eingriff zu bringenden Zahnräder 1, 2 und 3 weisen in an sich bekannter Weise Anspitzungen oder Abdachungen 4, 5 und 6 und 7 auf. Am Umkehr-Schieberad 2 sind hierbei zwei unterschiedliche Anspitzungen 5 und 6 vorgesehen, die sich dadurch unterscheiden, daß die eine Anspitzung auf jedem zweiten Zahn um einen bestimmten Betrag X bzw. an dem letzten ungeraden Zahn um einen Betrag X' zurückgenommen ist.

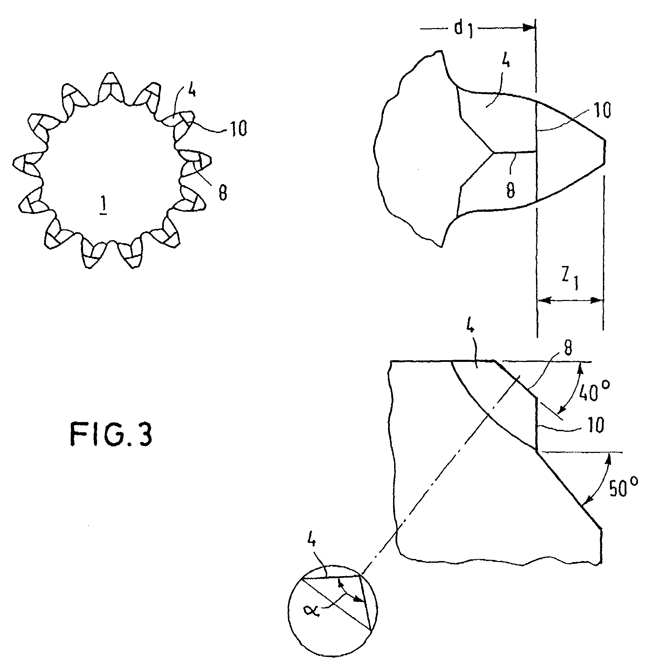

In den Figuren 3 bis 5 werden die besonderen Anspitzungen am Zahnrad 1 auf der Eingangswelle, auf dem Umkehr-Schieberad 2 auf der Schieberadachse und auf dem Zahnrad 3 auf der Ausgangswelle im Detail erläutert.

In Fig. 3 ist eine Ansicht des Zahnrades 1 mit Angabe der Zähnezahlen gezeigt und rechts davon ist eine Ansicht eines einzelnen Zahnes in Verbindung mit einem Schnitt entlang der Zahnachse und mit einem Schnitt senkrecht zur Anspitzung gezeigt.

Aus dieser Ansicht und dem Schnitt ergibt sich durch eine Durchmesserangabe der Startpunkt, der Vorderkante bzw. Schneidenkante der Anspitzung, die gemäß der Erfindung durch eine zweite Durchmesserangabe die auf einem zylindrischen Absatz hin verweist, radial zurückgenommen ist. Der Durchmesser des zylindrischen Absatzes ergibt sich hierbei durch die nachfolgende Formel 1 und die radiale Zurücknahme ist mit Z1 angegeben.

Formel 1: Die Formel besteht aus zwei Gleichungen mit zwei Unbekannten. Diese liefern z.B. mit Hilfe eines Iterationsprozesses die gesuchten Werte mit beliebiger Genauigkeit. Dargestellt sind die Gleichungen für das System Zahnrad 1 und 2.

$$2\,\pi\left(\frac{1}{ZZ1}+\frac{1}{ZZ2}\right)=\arccos\frac{a12^2-\left(r2+ZR\right)^2-\left(\frac{1}{2}\,d1\right)^2}{d1\cdot\left(r2+ZR\right)}+\arccos\frac{a12^2-r2^2-\left(\frac{1}{2}\,d1\right)^2}{d1\cdot r2}$$

$$d1=\sqrt{2}\cdot\sqrt{\frac{\left(r2+ZR\right)^2+r2^2-2\left(r2+ZR\right)\cdot r2\cdot\cos\left(\frac{2\,\pi}{ZZ_2}\right)}{\left(1-\cos\left(\frac{2\,\pi}{ZZ_1}\right)\right)}}$$

Hierbei bedeuten:

ZZ1 Zähnezahl Zahnrad 1 (z.B. 13)
ZZ2 Zähnezahl Zahnrad 2 (z.B. 31)
ZZ3 Zähnezahl Zahnrad 3 (z.B. 47)
a12 Achsabstand 1 zu 2 (z.B. 47.5 mm)
a23 Achsabstand 2 zu 3 (z.B. 85.0 mm)
ZR radiale Zurücknahme Zahnrad 2 (z.B. 1.0 mm)
Axiale Zurücknahme X = ZR tan $\Theta$ (Winkel der Schneidkante Zahnrad2 - hier 50°)
d1 reduzierter Anspitzungsdurchmesser Zahnrad 1
d3 reduzierter Anspitzungsdurchmesser Zahnrad 3
r2 Kontaktradius Zahnrad 2 mit Verzahnung Zahnrad 1 / 3 (Hilfsgröße)
Radiale Zurücknahme Z1 = Zahnkopfradius Zahnrad 1 - d1
Radiale Zurücknahme Z3 = Zahnkopfradius Zahnrad 3 - d3

Folgende Ergebnisse sind mit oben angegebenen Beispielwerten berechnet:

Für System Zahnrad 1-2: d1 = 28.9 mm (r2 = 33.3 mm)
Für System Zahnrad 2-3: d3 = 103.4 mm (r2 = 33.3 mm)

Die Anspitzung 4 weist hierbei einen Scheitelwinkel $\alpha$ auf, der vorzugsweise zwischen 90° und 100° liegt.

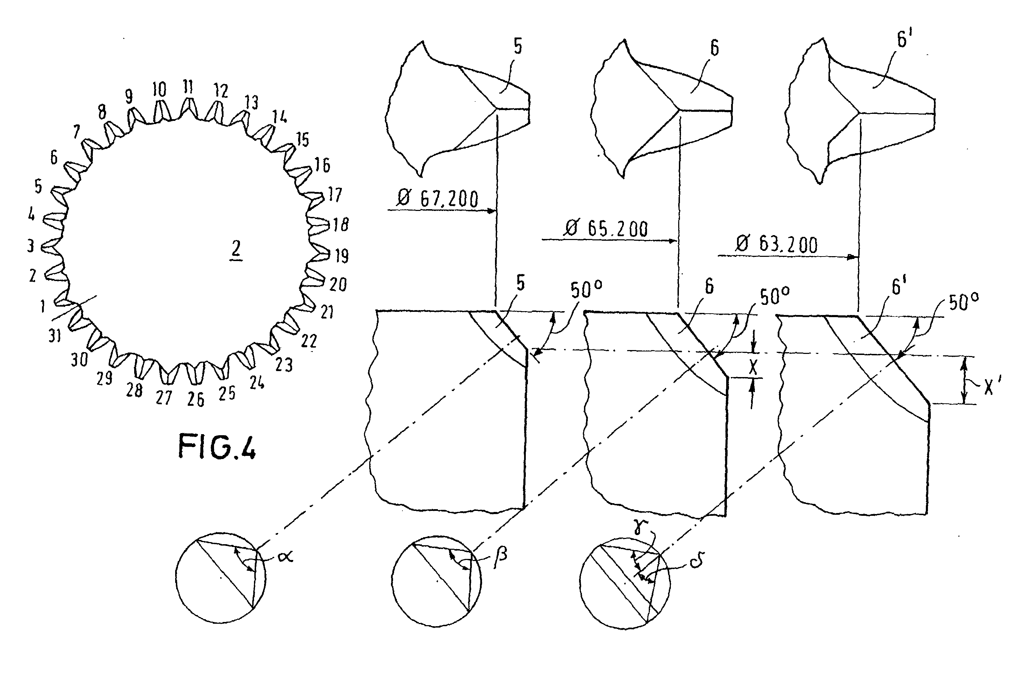

In Fig. 4 ist eine Ansicht des Umkehr-Schieberades 2 mit Angabe der Zähnezahl gezeigt, das zwei unterschiedliche Anspitzungen 5 und 6 bzw. 6' aufweist. Rechts vom Schieberad 2 sind Ansichten der Anspitzungen mit jeweils einem Schnitt entlang der Zahnachse und einem Schnitt senkrecht zur Anspitzung angeordnet, aus der die unterschiedlichen Anspitzungen besser hervorgehen.

Wie aufgezeigt ist, weisen die ungeraden Zähne 1 bis 29 einen Anspitzung 5 auf, die z.B. einen Scheitelwinkel von $\alpha$ in der Größenordnung von 90° bis 100° aufweist.

Die geraden Zähne 2 bis 30 weisen eine Anspitzung 6 auf, die um ein Maß X axial zurückgenommen ist und die z.B. einen Scheitelwinkel von $\beta$ von 90° aufweisen können und im ungünstigen Fall einer ungeraden Zähnezahl ist der letzte Zahn 31 mit einer Anspitzung 6' versehen, die um ein anderes Maß X' axial zurückgenommen ist.

Zusätzlich wird durch den vertikalen Schnitt durch die Anspitzung 6' darauf hingewiesen, daß jede der Anspitzungen 5, 6 und 6' auch asymmetrisch ausgeführt werden kann, indem unterschiedliche Winkel $\gamma$ und $\delta$ vorgesehen werden.

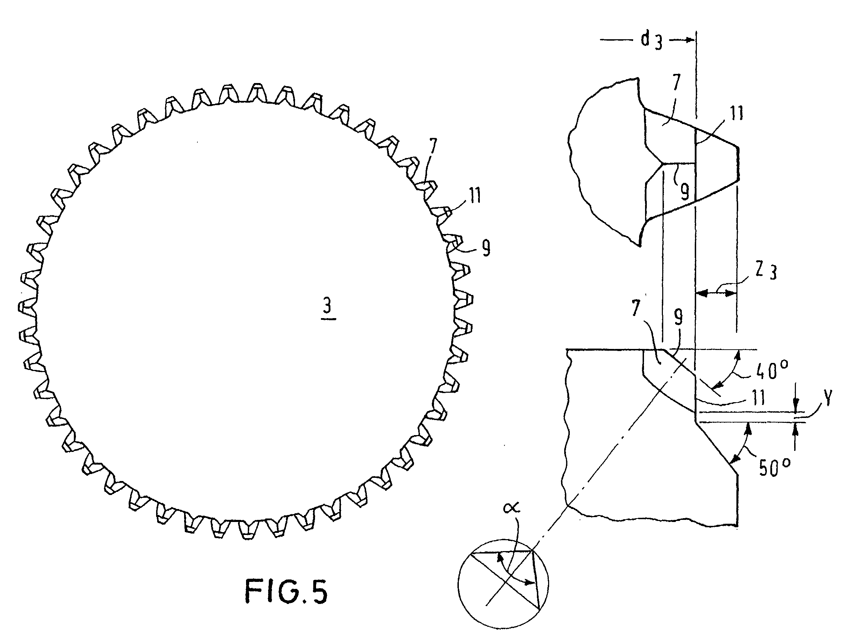

In Fig. 5 ist wieder eine Ansicht des Zahnrades 3 mit Angabe der Zähnezahlen gezeigt und rechts davon sind vergrößerte Ansichten und Schnitte durch die Anspitzung gezeigt. Die Anspitzung 7 kann wieder einen bestimmten Scheitelwinkel $\alpha$ aufweisen, wodurch sich ein Startdurchmesser für die Vorderkante bzw. Schneidenkante ergeben würde, der normalerweise bis zur vollen Zahnhöhe verlaufen würde.

Gemäß der Erfindung ist jedoch diese Vorderkante bzw. Schneidenkante 9 der Anspitzung 7 durch einen zylindrischen Absatz 11 auf einen Durchmesser zurückgenommen, der sich aus der vorhergehend genannten Formel 1 unter Einsatz der für dieses Zahnrad geltenden Daten ergibt und der in Fig. 5 als eine radiale Zurücknahme Z3 angegeben ist. Der zylindrische Absatz 11 soll sich hierbei vorzugsweise um einen Betrag Y über das Ende der Anspitzung 7 hinauserstrecken. Anschließend kann der Zahnkopf angefast sein.

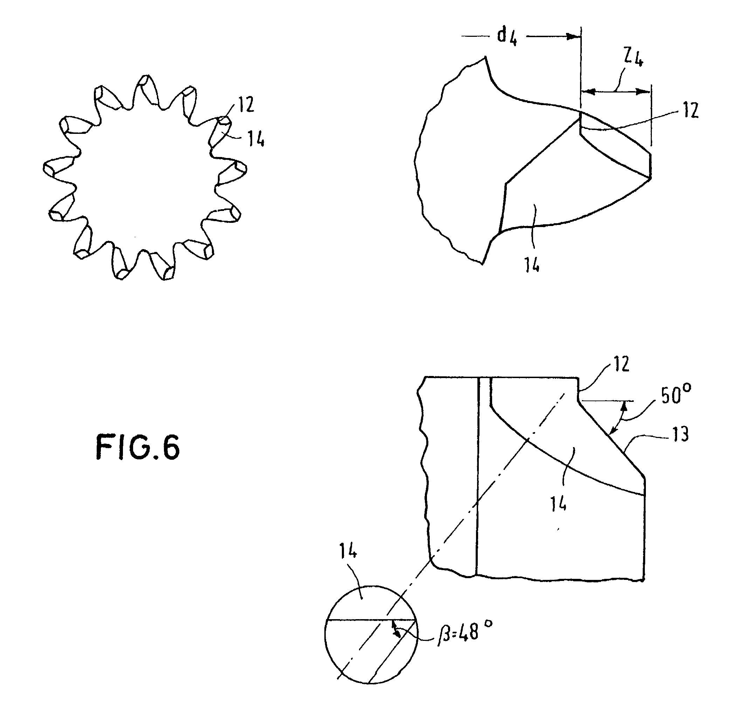

In Fig. 6 ist eine weitere Ausführungsform einer möglichen Anspitzung für Zähne eines Zahnrades auf der Eingangswelle gezeigt, wobei diese Anspitzung nun nurmehr aus einer einem zylindrischen Absatz 12 und einer einen Neigungswinkel aufweisenden Drehkontur 13 an der Stirnkante des Zahnes und einer sich anschließenden völlig asymmetrischen Fräsfläche 14 ergibt. Der Durchmesser d4 kann dabei die Werte d1, d3 oder r2 der Formel 1 annehmen, je nachdem für welches Zahnrad diese Ausführungsform zur Anwendung kommt.

Eine solche Ausführungsform macht eine weitere Verbilligung der Herstellung von Zahnrädern eines Umkehr-Schieberad-Systems möglich und sichert durch die Vermeidung von symmetrischen Anspitzungen den sogenannten Ratscheneffekt, der bei schnellem Schalten in den Rückwärtsgang auftreten kann. Durch die völlige Einseitigkeit der Fräsfläche 14 im Zusammenwirken mit der Drehkontur 12 und 13 wird bei schnellem Schalten in den Rückwärtsgang ein sicheres Einspuren ermöglicht.

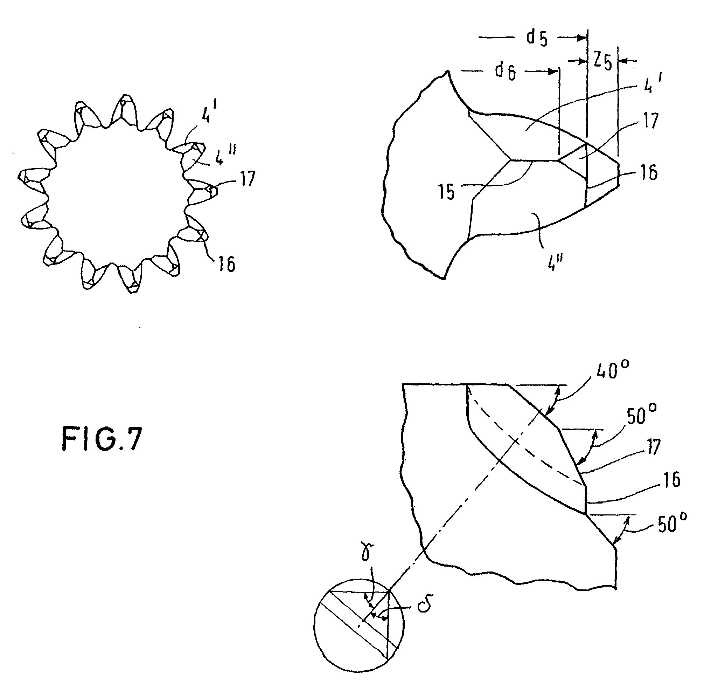

In Fig. 7 ist eine weitere Ausführungsform einer Anspitzung an einem Zahnrad auf einer Eingangswelle gezeigt, wobei die Anspitzung hier asymmetrisch ausgeführt ist und die Schneidenkante 15 durch eine Abfasung 17 gekürzt ist mit der sie in den zylindrischen Absatz 16 der radialen Zurücknahme Z5 übergeht.

Es muß noch darauf hingewiesen werden, daß die in den Fig. 6 und 7 aufgezeigten Ausführungsformen selbstverständlich auch am Umkehr-Schieberad, als auch am Zahnrad an der Ausgangswelle sinngemäß angewendet werden können.

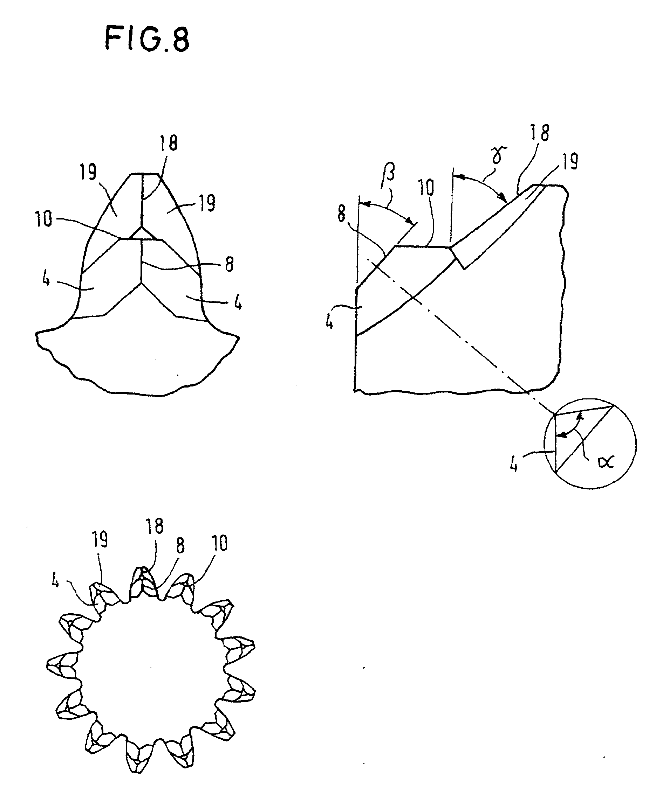

In Figur 8 ist eine weitere Ausführungsform mit zwei Anspitzungen an einem Zahnrad mit der radialen Zurücknehmung 10 gezeigt. Nach Fig. 3 weist die Verzahnung unterhalb der radialen Zurücknehmung 10 die Schneidenkante 8 mit derAnspitzung 4 auf. Oberhalb der Zurücknehmung 10 weisen die Stirnseiten der Verzahnung die zusätzliche Schneidenkante 18 mit der zusätzlichen Anspitzung 19 auf. Diese Ausführung der doppelten Anspitzung kann wiederum auf ein oder mehrere Zahnräder auf beliebigen Wellen angewendet werden.

**Patentansprüche**

1. Umkehr-Schieberad-Anordnung für ein Wechselgetriebe, bei dem das geradverzahnte oder schrägverzahnte Umkehr-Schieberad (2) auf einer Schieberadachse (B) axial verschiebbar angeordnet und zum Bewirken einer Drehrichtungsumkehr zwischen einer Eingangswelle auf einer Achse (A) und einer Ausgangswelle auf einer Achse (C) in Eingriff mit einem Zahnrad (1) auf der Eingangswelle (A) und einem Zahnrad (3) auf der Ausgangswelle (C) bringbar ist und wobei die in Einschiebrichtung (S) liegenden Stimkanten der Zähne der beteiligten Zahnräder (1, 2 und 3) mit Anspitzungen (4, 5 und 6 sowie 7) zum Erleichtern des Einspurens versehen sind und wobei unterschiedliche Gruppen von Zähnen mit unterschiedlichen Anspitzungen (5 und 6) mit unterschiedlichen axialen Zurücknahmen (x) versehen sein können,
   **dadurch gekennzeichnet, daß**
   an den beiden anderen der drei miteinander in Eingriff zu bringenden Zahnräder (1 und 3) die Vorderkante bzw. Schneidenkante (8 und 9) der Anspitzungen (4 und 7) durch einen zylindrischen Absatz (10 bzw. 11) um eine bestimmte radiale Zurücknahme (Z1 bzw. Z3) auf einen bestimmten Durchmesser (d1 und d3; d4) zurückgenommen sind, der sich aus den Formeln

$$2\,\pi\left(\frac{1}{ZZ1}+\frac{1}{ZZ2}\right)=\arccos\frac{a12^2-\left(r2+ZR\right)^2-\left(\frac{1}{2}\,d1\right)^2}{d1\cdot\left(r2+ZR\right)}+\arccos\frac{a12^2-r2^2-\left(\frac{1}{2}\,d1\right)^2}{d1\cdot r2}$$

und

$$d1 = \sqrt{2} \cdot \sqrt{\frac{(r2 + ZR)^2 + r2^2 - 2(r2 + ZR) \cdot r2 \cdot \cos\left(\frac{2\pi}{ZZ_2}\right)}{\left(1 - \cos\left(\frac{2\pi}{ZZ_1}\right)\right)}}$$

ergibt, wobei die Abkürzungen bedeuten:

ZZ1 = Zähnezahl Zahnrad 1;
ZZ2 = Zähnezahl Zahnrad 2;
ZZ3 = Zähnezahl Zahnrad 3;
a12 = Achsabstand 1 zu 2;
a23 = Achsabstand 2 zu 3;
ZR = radiale Zurücknahme Zahnrad 2;
Axiale Zurücknahme X = ZR tan Θ (Winkel der Schneidkante Zahnrad 2);
d1 = reduzierter Anspitzungsdurchmesser Zahnrad 1;
d3 = reduzierter Anspitzungsdurchmesser Zahnrad 3;
r2 = Kontaktradius Zahnrad 2 mit Verzahnung Zahnrad 1/3 (Hilfsgröße);
Radiale Zurücknahme Z1 = Zahnkopfradius Zahnrad 1 - d1; und
Radiale Zurücknahme Z3 = Zahnkopfradius Zahnrad 3 - d3.

**2.** Umkehr-Schieberad-Anordnung nach Anspruch 1,
**dadurch gekennzeichnet, daß**
die ungeraden Zähne (1, 3, 5, ...) des Umkehr-Schieberades (2) mit einer Anspitzung (5) mit einem bestimmten Neigungswinkel ($\alpha$) versehen sind, die geraden Zähne (2, 4, 6, ....) mit einer Anspitzung (6) mit einem anderen Scheitelwinkel ($\beta$) versehen sind, und bei ungerader Zähneanzahl der verbleibende Zahn mit einer Anspitzung (6') mit unterschiedlichem Scheitelwinkel und/oder einer anderen axialen Zurücknahme (X') versehen ist.

**3.** Umkehr-Schieberad-Anordnung nach einem der Ansprüche 1 oder 2,
**dadurch gekennzeichnet, daß**
jede Anspitzung (5, 6 und 6') asymmetrisch mit unterschiedlichen Winkeln ($\gamma$ und $\delta$) ausgebildet ist.

**4.** Umkehr-Schieberad-Anordnung nach Anspruch 1,
**dadurch gekennzeichnet, daß**
die miteinander in Eingriff zu bringenden Zahnräder an ihren Stirnkanten mit einer Drehkontur und einer völlig asymmetrischen Fräsfläche (14) versehen sind, die einander gegenüberliegend wechselseitig angeordnet sein können.

**5.** Umkehr-Schieberad-Anordnung nach Anspruch 4,
**dadurch gekennzeichnet, daß**
an einem der drei miteinander in Eingriff zu bringenden Zahnräder (2) die Stirnkanten der Zähne mit unterschiedlichen Anspitzungen (5 und 6) mit unterschiedlichen axialen Zurücknahmen (x) versehen sind, bestehend aus einem zylindrischen Absatz (12) mit dem bestimmten Durchmesser (d4) und einer Abfasung (13).

**6.** Umkehr-Schieberad-Anordnung nach dem Oberbegriff des Anspruches 1,
**dadurch gekennzeichnet, daß**
an den beiden anderen der drei miteinander in Eingriff zu bringenden Zahnräder (1 und 3) die Vorderkante bzw. Schneidenkante der Anspitzungen (4 und 7) durch eine Abfasung (17) und einen zylindrischen Absatz (16) um eine bestimmte radiale Zurücknahme auf einen bestimmten Durchmesser (d5 und d6) zurückgenommen sind, die sich aus geometrischen Verhältnissen im Zusammenspiel mit den Anspitzungen des Umkehr-Schieberades (2) ergeben.

**7.** Umkehr-Schieberad-Anordnung nach Anspruch 6,
**dadurch gekennzeichnet, daß**

die Schneidkante außerhalb der Zahnmitte angeordnet ist.

8. Umkehr-Schieberad-Anordnung nach einem der vorangegangenen Ansprüche, **dadurch gekennzeichnet,daß** an mindestens einem der Zahnräder (1, 3) mit den zylindrischen Absätzen (10,11) die aus der radialen Zurücknehmung resultierenden, axial zurückgenommenen Stirnseiten der Verzahnung über den zylindrischen Absätzen (10, 11) eine weitere Anspitzung (19) mit einer Schneidenkante (18) aufweisen.

**Claims**

1. Sliding reverse gear arrangement for a speed-changing gear, wherein the straight toothed or angular toothed sliding reverse gear arrangement (2) is arranged in an axially displaceable way on a sliding gear axis (B) and for the purpose of effecting a reverse of rotation direction between an input shaft on an axis (A) and an output shaft on an axis (C) can be brought into engagement with a pinion (1) on the input shaft (A) and a pinion (3) on the output shaft (C) and wherein the front edges of the teeth of the involved pinions (1, 2 and 3) lying in the sliding direction (S) are provided with sharpened points (4, 5, 6 and 7) in order to make the single tracking easier and wherein different groups of teeth with different sharpened points (5 and 6) can be provided with different axial recessed areas (x),
   **characterised in that**
   on the other two of the three pinions to be brought into engagement with each other (1 and 3) the front edge or cutting edge (8 and 9) of the sharpened points (4 and 7) are recessed through a cylindrical ledge (10 or 11) by a certain radial recessed area (Z1 or Z3) to a certain diameter (d1 and d3; d4), which results from the formulae

$$2\,\pi\left(\frac{1}{ZZ1}+\frac{1}{ZZ2}\right)=\arccos\frac{a12^2-\left(r2+ZR\right)^2-\left(\frac{1}{2}d1\right)^2}{d1\cdot\left(r2+ZR\right)}+\arccos\frac{a12^2-r2^2-\left(\frac{1}{2}d1\right)^2}{d1\cdot r2}$$

and

$$d1=\sqrt{2}\cdot\sqrt{\frac{\left(r2+ZR\right)^2+r2^2-2\left(r2+ZR\right)\cdot r2\cdot\cos\left(\frac{2\,\pi}{ZZ_2}\right)}{\left(1-\cos\left(\frac{2\,\pi}{ZZ_1}\right)\right)}}$$

   wherein the abbreviations mean

   ZZ1 = number of teeth pinion 1;
   ZZ2 = number of teeth pinion 2;
   ZZ3 = number of teeth pinion 3;
   a12 = axial distance 1 to 2;
   a23 = axial distance 2 to 3;
   ZR = radial recessed area pinion 2;
   axial recessed area Z = ZR - tan Θ (angle of the cutting edge pinion 2);
   d1 = reduced sharpened point diameter pinion 1;
   d3 = reduced sharpened point diameter pinion 3;
   r2 = contact radius pinion 2 with toothing pinion 1 / 3 (auxiliary size);
   radial recessed area Z1 = tooth crest radius pinion 1 - d1; and
   radial recessed area Z3 = tooth crest radius pinion 3 - d3.

2. Sliding reverse gear arrangement according to Claim 1,
   **characterised in that**

the uneven teeth (1, 3, 5, ....) of the sliding reverse gear arrangement (2) are provided with a sharpened point (5) with a certain angle of inclination ($\alpha$), the even teeth (2, 4, 6, ....) are provided with a sharpened point (6) with another vertical angle ($\beta$), and in the event of an uneven number of teeth the remaining tooth is provided with a sharpened point (6') with a different vertical angle and / or another axial recessed area (X').

3.  Sliding reverse gear arrangement according to one of the Claims 1 or 2,
    **characterised in that**
    each sharpened point (5, 6 and 6') is formed asymmetrically with different angles ($\gamma$ and $\delta$).

4.  Sliding reverse gear arrangement according to Claim 1, **characterised in that** the pinions to be brought into engagement with each other are provided on their front edges with a rotational contour and a fully asymmetrical cutter surface (14) which can be reciprocally arranged lying opposite each other.

5.  Sliding reverse gear arrangement according to Claim 4,
    **characterised in that**
    on one of the three pinions (2) to be brought into engagement with each other the front edges of the teeth with different sharpened points (5 and 6) are provided with different axial recessed areas (x), consisting of a cylindrical ledge (12) with the specific diameter (d4) and bevelling (13).

6.  Sliding reverse gear arrangement according to the introductory clause of Claim 1,
    **characterised in that**
    on the other two of the three pinions to be brought into engagement with each other (1 and 3) the front edge or the cutting edge of the sharpened points (4 and 7) are recessed through bevelling (17) and a cylindrical ledge (16) by a certain radial recessed area to a certain diameter (d5 and d6), which result from the geometrical relationships in association with the sharpened points of the sliding reverse gear arrangement (2).

7.  Sliding reverse gear arrangement according to Claim 6,
    **characterised in that**
    the cutting edge is arranged outside the centre of the tooth.

8.  Sliding reverse gear arrangement according to any one of the preceding claims,
    **characterised in that**
    on at least one of the pinions (1, 3) with the cylindrical ledges (10, 11) the axially recessed front sides of the toothing, which result from the radial recess, over the cylindrical ledges (10, 11) have a further sharpened point (19) with a cutting edge (18).

**Revendications**

1.  Ensemble à roue coulissante inverseuse pour une boîte de vitesses dans laquelle la roue coulissante inverseuse (2), à denture droite ou à denture oblique, est montée à coulissement axial sur un essieu (B) et peut être mise en prise, pour provoquer une inversion du sens de rotation entre un arbre d'entrée disposé sur un axe (A) et un arbre de sortie disposé sur un axe (C), avec une roue dentée (1) calée sur l'arbre d'entrée (A) et une roue dentée (3) calée sur l'arbre de sortie (C), sachant que les arêtes frontales des dents des roues dentées associées (1, 2 et 3), situées dans la direction de l'engagement (S), sont munies de profilages pointus (4, 5 et 6, ainsi que 7) en vue de faciliter l'engrènement, et sachant que différents groupes de dents peuvent être pourvus de profilages pointus différents (5 et 6) accusant différents retraits axiaux (x),
    **caractérisé par le fait que**,
    sur les deux autres (1 et 3), parmi les trois roues dentées devant être mises mutuellement en prise, l'arête antérieure ou l'arête taillée (8 et 9) des profilages pointus (4 et 7) est respectivement ramenée, par l'intermédiaire d'un décrochement cylindrique (10, respectivement 11) d'un retrait radial déterminé (21, respectivement Z3), à un diamètre déterminé (d1 et d3 ; d4) résultant des formules

$$2\pi \left( \frac{1}{ZZ1} + \frac{1}{ZZ2} \right) = \arccos \frac{a12^2 - (r2 + ZR)^2 - \left(\frac{1}{2}d1\right)^2}{d1.(r2 + ZR)} + \arccos \frac{a12^2 - r2^2 - \left(\frac{1}{2}d1\right)^2}{d1.r2}$$

$$d1 = \sqrt{2} \cdot \sqrt{\frac{(r2 + ZR)^2 + r2^2 - 2(r2 + ZR).r2.\cos\left(\frac{2\pi}{ZZ_2}\right)}{\left(1 - \cos\left(\frac{2\pi}{ZZ_1}\right)\right)}},$$

les abréviations ayant les significations suivantes :

ZZ1 = nombre de dents de la roue dentée 1 ;
ZZ2 = nombre de dents de la roue dentée 2 ;
ZZ3 = nombre de dents de la roue dentée 3 ;
a12 = distance entre axes de 1 à 2 ;
a23 = distance entre axes de 2 à 3 ;
ZR = retrait radial de la roue dentée 2 ;
retrait axial X = ZR.tan θ (angle de l'arête taillée de la roue dentée 2) ;
d1 = diamètre réduit du profilage pointu de la roue dentée 1 ;
d3 = diamètre réduit du profilage pointu de la roue dentée 3 ;
r2 = rayon de contact de la roue dentée 2 avec la denture des roues dentées 1/3 (grandeur auxiliaire) ;
retrait radial Z1 = rayon du sommet des dents de la roue dentée 1 - d1 ; et
retrait radial Z3 = rayon du sommet des dents de la roue dentée 3 - d3.

2. Ensemble à roue coulissante inverseuse, selon la revendication 1,
   **caractérisé par le fait que**
   les dents impaires (1, 3, 5, ...) de la roue coulissante inverseuse (2) sont pourvues d'un profilage pointu (5) présentant un angle d'inclinaison déterminé ($\alpha$) ; les dents paires (2, 4, 6, ...) sont munies d'un profilage pointu (6) présentant un autre angle au sommet ($\beta$) ; et, en présence d'un nombre de dents impair, la dent restante est dotée d'un profilage pointu (6') présentant un angle au sommet différent et/ou un autre retrait axial (X').

3. Ensemble à roue coulissante inverseuse, selon l'une des revendications 1 ou 2,
   **caractérisé par le fait que**
   chaque profilage pointu (5, 6 et 6') est de réalisation asymétrique présentant des angles différents ($\gamma$ et $\delta$).

4. Ensemble à roue coulissante inverseuse, selon la revendication 1,
   **caractérisé par le fait que**
   les roues dentées devant être mises mutuellement en prise sont munies, sur leurs arêtes frontales, d'un profil usiné par tournage et d'une surface fraisée (14) totalement asymétrique, qui peuvent être alternativement agencés l'un en vis-à-vis de l'autre.

5. Ensemble à roue coulissante inverseuse, selon la revendication 4,

**caractérisé par le fait que**,

sur l'une (2), parmi les trois roues dentées devant être mises mutuellement en prise, les arêtes frontales des dents sont munies de différents profilages pointus (5 et 6) présentant des retraits axiaux différents (x), comprenant un décrochement cylindrique (12) possédant le diamètre déterminé (d4), et un biseau (13).

6. Ensemble à roue coulissante inverseuse, selon le préambule de la revendication 1,
**caractérisé par le fait que**,
sur les deux autres (1 et 3), parmi les trois roues dentées devant être mises mutuellement en prise, l'arête antérieure ou arête taillée des profilages pointus (4 et 7) est respectivement ramenée par l'intermédiaire d'un biseau (17) et d'un décrochement cylindrique (16), d'un retrait radial déterminé, à un diamètre déterminé (d5 et d6) résultant de conditions géométriques en association avec les profilages pointus de la roue coulissante inverseuse (2).

7. Ensemble à roue coulissante inverseuse, selon la revendication 6,
**caractérisé par le fait que**
l'arête taillée est disposée à l'extérieur du centre de la dent.

8. Ensemble à roue coulissante inverseuse, selon l'une des revendications précédentes,
**caractérisé par le fait que**,
sur au moins l'une des roues dentées (1, 3) munies des décrochements cylindriques (10, 11), les faces extrêmes de la denture, accusant un retrait axial et résultant du retrait radial, présentent, au-dessus des décrochements cylindriques (10, 11), un profilage pointu supplémentaire (19) doté d'une arête taillée (18).

EP 1 045 170 B1

FIG.1

FIG.2

FIG.3

FIG.4

2

7 8 9 10 11 12 13 14 15 16 17 18 19 20 21 22 23 24 25 26 27 28 29 30 31 1 2 3 4 5 6

Ø 67.200  Ø 65.200  Ø 63.200

5  6  6'

50°  50°  50°

X  X'

α  β  γ  δ

EP 1 045 170 B1

13

FIG.5

FIG.6

EP 1 045 170 B1

FIG.7

# FIG.8